## Europäisches Patentamt
## European Patent Office
## Office européen des brevets

(19)

(11) Veröffentlichungsnummer: **0 057 388**
**B1**

(12)

# EUROPÄISCHE PATENTSCHRIFT

(45) Veröffentlichungstag der Patentschrift:
29.04.87

(51) Int. Cl.⁴: **C 08 K 5/56, C 08 K 5/07,**
**C 08 J 7/00, D 06 M 13/00,**
**D 06 M 13/12, C 04 B 41/46,**
**B 01 F 17/00**

(21) Anmeldenummer: **82100423.1**

(22) Anmeldetag: **22.01.82**

(54) Verfahren zum Benetzbarmachen von Substraten.

(30) Priorität: **29.01.81 CH 574/81**

(43) Veröffentlichungstag der Anmeldung:
**11.08.82 Patentblatt 82/32**

(45) Bekanntmachung des Hinweises auf die Patenterteilung:
**29.04.87 Patentblatt 87/18**

(84) Benannte Vertragsstaaten:
**DE FR GB IT**

(56) Entgegenhaltungen:
**CH-A-397 237**
**FR-A-1 524 717**
**US-A-4 139 660**

**Die Akte enthält technische Angaben, die nach**
**dem Eingang der Anmeldung eingereicht wurden**
**und die nicht in dieser Patentschrift enthalten sind.**

(73) Patentinhaber: **Joos, Dr. Bernhard,**
**Kurfirstenstrasse 23, CH- 8002 Zürich (CH)**

(72) Erfinder: **Joos, Dr. Bernhard, Kurfirstenstrasse 23,**
**CH- 8002 Zürich (CH)**

(74) Vertreter: **Wann, Ingrid, Schmauder & Wann,**
**Patentanwaltsbüro Nidelbadstrasse 75, CH- 8038**
**Zürich (CH)**

## Beschreibung

Die Erfindung betrifft ein Verfahren zum Benetzbarmachen von Substraten, insbesondere von festen oder gelartigen Substraten.

Es ist bekannt, dass zwischen den grenzflächenenergetischen Grundgrössen, nämlich der Oberflächenspannung eines Substrats, z.B. eines Festkörpers, $\sigma_s$, der Oberflächenspannung einer Flüssigkeit $\sigma_f$ und der Grenzflächenspannung $\gamma_{sf}$ zwischen Substrat und Flüssigkeit einer Zustandsgleichung $F (\sigma_s, \sigma_f, \gamma_{sf}) = 0$ besteht. Es ist weiterhin bekannt, dass die Benetzbarkeit eines Substrats durch eine Flüssigkeit von dem Verhältnis der Oberflächenspannungen von Substrat und Flüssigkeit abhängt und dass die Benetzbarkeit des Substrats entweder durch Herabsetzung der Oberflächenspannung der Flüssigkeit oder durch Erhöhung der Oberflächenspannung des Substrats verbessert werden kann. Die Herabsetzung der Oberflächenspannung der Flüssigkeit kann beispielsweise durch Zusatz von Emulgatoren zu der Flüssigkeit erfolgen, eine Massnahme, die bei zahlreichen zum Stand der Technik gehörenden Verfahren angewendet wird. Die Erhöhung der Oberflächenspannung von Festkörpern kann durch eine spezielle Oberflächenbehandlung, wie sie beispielsweise aus der CH-PS 397 237, der DE-PS 1 519 547, der CA-PS 802 097, der IT-PS 731 137, der FR-PS 1 402 310, der GB-PS 1 079 391 und der US-PS 4 139 660 bekannt ist, erreicht werden. In der CH-PS 397 237 wird zwar beiläufig erwähnt, dass die wirksame Verbindung, d.h. eine Verbindung eines Elements der IV. Haupt- oder Nebengruppe des Periodensystems der Elemente, einer Kunststoffmasse vor der Verformung zugesetzt werden kann, es fehlt jedoch jeglicher Hinweis darauf, dass dieses Vorgehen tatsächlich durchgeführt worden ist. Vielmehr werden in sämtlichen Beispielen Lösungen von wirksamen Verbindungen beschrieben, in die ein Formkörper aus Kunststoff eingetaucht und so oberflächlich benetzbar gemacht wird. Ausserdem handelt es sich bei den in der CH-PS 397 237 beschriebenen Verbindungen um Verbindungen der genannten Elemente mit Ionenbindung, d.h. um salzartige Verbindungen.

Die Bevorzugung von salzartigen Verbindungen ist darauf zurückzuführen, dass diese Verbindungen wesentlich stabiler sind als Chelatbildner, wie z.B. Acetylacetonate und Halogenacetylacetonate, gegen deren Verwendung in unverdünnter Form, wie sie Voraussetzung für die Einarbeitung in Kunststoffmassen ist, erhebliche Bedenken bestanden. Folglich war nicht vorauszusehen, dass es möglich sein könnte, Kunststoffe in der Masse benetzbar zu machen, indem man Acetonate oder Halogenacetylacetonate der genannten Elemente in die Kunststoffmasse vor der Formgebung einarbeitet.

Dies war auch bei Kenntnis der US-PS 4 139 660 nicht vorauszusehen, da dort ausschliesslich die Verwendung von Zirkonacetylacetonat und Zinndichloriddiacetylacetonat in Form stark verdünnter alkoholischer Lösungen zur Oberflächenbehandlung beschrieben wird. Das letztgenannte Verfahren, das sich für die Behandlung von Brillengläsern sowie für die Behandlung der Sichtscheiben von Taucherausrüstungen ausgezeichnet bewährt hat, eignet sich jedoch nicht für Gegenstände, die einer mechanischen Belastung, z.B. durch Abrieb, unterliegen.

Wird die behandelte Oberfläche durch Abrieb abgetragen, so wird die darunterliegende, nicht behandelte Schicht freigesetzt, die, wie das ursprüngliche Material, nicht oder nur schwer benetzbar ist. Dies hat zur Folge, dass die durch die Oberflächenbehandlung erzielte Verbesserung der Benetzbarkeit schon nach kurzzeitiger mechanischer Belastung aufgehoben wird und die Oberflächenbehandlung wiederholt werden muss.

Aufgabe der Erfindung war es daher, ein Verfahren auszugeben, mit dessen Hilfe es gelingt, die Benetzbarkeit von Substraten dauerhaft, zu erhöhen, so dass sie auch unter dem Einfluss mechanischer Belastung erhalten bleibt.

Die Lösung dieser Aufgabe gelingt mit Hilfe des in Patentanspruch 1 definierten Verfahrens, dessen besondere Ausgestaltungen in den Patentansprüchen 2 bis 16 definiert sind.

Mit Hilfe dieses Verfahrens gelingt es, eine innerhalb des ganzen Substrats gleichmässige Verbesserung der Benetzbarkeit zu erreichen, so dass die bei fortschreitender Abtragung der Oberfläche freigelegten darunterliegenden Schichten die gleiche Benetzbarkeit aufweisen wir die ursprüngliche Oberfläche. Wesentlich ist dabei, dass die zur Verbesserung der Benetzbarkeit verwendeten Acetylacetonate und Halogenacetylacetonate nicht nur auf die Oberfläche des Substrats aufgebracht sondern innerhalb des Substrats verteilt werden. Dabei nimmt die Wirksamkeit dieser Acetylacetonate und Halogenacetylacetonate mit deren Verteilungsgrad zu. Dies bedeutet, dass die Wirksamkeit der Acetylacetonate und Halogenacetylacetonate umso grösser ist, je feiner sie verteilt sind. Es empfehlen sich deshalb Teilchengrössen von etwa $10^{-4}$ cm bis hinab zur kolloidalen Verteilung, d.h. zu Teilchengrössen von $10^{-5}$ bis $10^{-7}$ cm. Aus dem Vorhergehenden folgt, dass die Zugabemenge der Acetylacetonate und Halogenacetylacetonate umso kleiner sein kann, je feiner diese verteilt sind. Bei ausreichend feiner Verteilung, z.B. bei Teilchengrössen $\leq 10^{-4}$ cm lässt sich der angestrebte Erfolg schon bei Zugabemengen von 3 bis 5 Gew.-%, bezogen auf das Gewicht des Substrats, erreichen. Die Zugabemenge richtet sich allgemein nach dem Verteilungsgrad und der Art des Substrats, insbesondere dessen Eigenschaften, und dem Verwendungszweck. Die obere Grenze der Zugabemenge wird dabei durch die Beeinflussung der mechanischen Eigenschaften des Substrats bestimmt. Allgemein gilt, dass die Acetylacetonate und Halogenacetylacetonate nur in einer solchen Menge zugegeben werden dürfen, dass durch ihr Vorhandensein das Gefüge des Substrats nicht wesentlich verändert und dessen mechanische Eigenschaften, insbesondere dessen Festigkeit, nicht beeinträchtigt werden, so dass dessen Eignung für die vorgesehene Verwendung nicht beeinträchtigt wird.

Unter den Acetylacetonaten und Halogenacetylacetonaten sind Zirkonacetylacetonat und Zinndichlordiacetylacetonat besonders bevorzugt.

Wesentlich für die Auswahl der Acetylacetonate und Halogenacetylacetonate ist, dass diese im Substrat nicht löslich sind, sondern in das Substrat in Form feinverteilter punktförmiger Aggregate eingebaut werden. In diesem Zusammenhang ist die Angabe "punktförmig" nicht als Aussage über die Gestalt der Aggregate aufzufassen, sondern soll lediglich den Gegensatz zur flächigen Ausbreitung zum Ausdruck bringen.

Die Acetylacetonate und Halogenacetylacetonate können in das Substrat in Form von Lösungen, insbesondere in organischen Lösungsmitteln, oder Suspensionen oder in fester Form eingearbeitet werden. Die Art der Einarbeitung richtet sich hauptsächlich nach der Art des zu behandelnden Substrats. Das Einbringen kann mit Hilfe üblicher Mischmethoden, wie sie jedem Fachmann geläufig sind, erfolgen. Wesentlich ist dabei nur, dass eine möglichst feine Verteilung im Substrat erreicht wird. So kann es in bestimmten Fällen vorteilhaft sein, ein inertes Trägermaterial, z.B. hochdisperse Kieselsäure, mit dem Acetylacetonat oder Halogenacetylacetonat zu behandeln und das mit diesen beladene Trägermaterial in das Substrat einzuarbeiten. Auf diese Weise wird eine ausserordentlich feine und gleichmässige Verteilung dieser Substanzen im Substrat erreicht, zumal eine mono- bzw. bimolekulare Bedeckung der Partikeln des Trägermaterials mit den Acetylacetonaten bzw. Halogenacetylacetonaten ausreichend ist. Dieses Vorgehen empfiehlt sich insbesondere dann, wenn es sich beim Substrat um eine plastische Masse handelt, der zur Verbesserung ihrer mechanischen Eigenschaften ohnehin ein inerter Träger zugesetzt wird.

Soll ein aus zwei oder mehr Komponenten gebildetes Substrat behandelt werden, so kann man so vorgehen, dass nur eine Komponente mit dem Acetylacetonat oder Halogenacetylacetonat behandelt und anschliessend die behandelte Komponente mit den übrigen Komponenten vermischt wird.

Wird das Verfahren auf Substrate aus polymeren Materialien wie Homo- oder Copolymeren angewendet, so kann das Acetylacetonat oder Halogenacetylacetonat einem Monomer oder Präpolymer zugesetzt und gegebenenfalls einpolymerisiert werden.

Die Verbesserung der Benetzbarkeit von Textilien, die ganz oder teilweise aus synthetischen Fasern bestehen, kann erreicht werden, wenn man dem zur Faserherstellung dienenden Material das Acetylacetonat oder Halogenacetylacetonat vor dem Schmelzspinnen zusetzt und darin verteilt.

Die Tatsache, dass die aus der mangelhaften Benetzbarkeit von Substraten resultierenden Probleme in praktisch allen Gebieten der Technik auftreten, erschliesst für das erfindungsgemässe Verfahren ein weiteres und breitgefächertes Anwendungsgebiet.

Zu den wichtigsten Anwendungen zählen:
- Benetzbarmachen von Substraten aus Polymeren, wie Polyäthylen, Polypropylen, Teflon und zahllosen weiteren Homo- und Copolymeren. Hierzu zählt beispielsweise das Benetzbarmachen von Fahrzeugreifen sowie von Werkzeug- und Maschinenteilen aus Kunststoffen;
- Benetzbarmachen von Substraten aus Kautschuk und kautschukartigen Massen, z.B. von Fahrzeugreifen;
- Benetzbarmachen von Baustoffen, insbesondere von Betonprodukten;
- Benetzbarmachen von Strassenbelägen;
- Benetzbarmachen von Textilien die ganz oder teilweise aus synthetischen Fasern bestehen, um deren Trageigenschaften zu verbessern;
- Stabilisierung von Suspensionen, insbesondere in der Farbstoffchemie, z.B. zur Verbesserung der Färbeeigenschaften, sowie zur Stabilisierung von Dispersionsfarben, bei der Katalysatorherstellung, bei der Konfektionierung von Schädlingsbekämpfungsmitteln sowie in der pharmazeutischen Chemie.

Die vorstehende Aufstellung ist nicht abschliessend; sie soll vielmehr lediglich die Vielfalt der Anwendungsmöglichkeiten veranschaulichen.

Für die Anwendung des erfindungsgemässen Verfahrens zum Benetzbarmachen bzw. zur Verbesserung der Benetzbarkeit von Substraten aus Polymeren empfehlen sich verschiedene Methoden, z.B.:
a) Einbringen der Acetylacetonate und/oder Halogenacetylacetonate in die polymere Masse vor dem Verformen;
b) Behandeln mindestens eines der Monomere oder Präpolymere mit den Acetylacetonaten und/oder Halogenacetylacetonaten vor der Polymerisation und Einpolymerisieren dieser Verbindungen.
c) Im Falle der Verwendung von Füllstoffen, Behandeln des Füllstoffs mit Acetylacetonaten und/oder Halogenacetylacetonaten und anschliessendes Verteilen des behandelten Füllstoffs im Polymer.

Die letztgenannte Methode empfiehlt sich insbesondere bei der Herstellung von Fahrzeugreifen aus Kunststoff oder Kautschuk. In diesem Fall ist es zweckmässig, den als Füllstoff verwendeten Russ mit den Acetylacetonaten und/oder Halogenacetylacetonaten zu behandeln und den so behandelten Russ vor dem Verformen oder, im Fall von Kautschuk, vor dem Vulkanisieren zuzugeben und in der Kunststoff- bzw. Kautschukmasse zu verteilen. Beim Benetzbarmachen von Baustoffen, insbesondere von Betonprodukten geht man zweckmässigerweise so vor, dass man die Zuschlagstoffe, z.B. Sand, vor dem Vermischen oder Anmachen mit den Acetylacetonaten oder Halogenacetylacetonaten behandelt, wobei diese sowohl in fester als auch in gelöster Form eingesetzt werden können. Die Menge an Acetylacetonaten bzw. Halogenacetylacetonaten sollte etwa 5 bis 20 Gew.-%, bezogen auf das Gesamtgewicht der Mischung, betragen. Auf diese Weise lässt sich nicht nur eine höhere Dichte bei Beton erzielen, sondern darüberhinaus eine verbesserte Adhäsion der Fahrzeugreifen im Falle von Strassenbelägen aus Beton, bzw. eine verbesserte Putzhaftung bei Bauwerken.

Bei Strassenbelägen aus Asphalt oder Teerprodukten kann eine Verbesserung der Benetzbarkeit des Belags und damit eine verbesserte Adhäsion von Fahrzeugreifen erreicht werden, wenn man die Zuschlagstoffe, z.B. Sand, vor dem Vermischen mit dem Asphalt oder den Teerprodukten mit den Acetylacetonaten bzw. Halogenacetylacetonaten behandelt. Die optimalen Zugabemengen können leicht anhand von Routineuntersuchungen ermittelt werden.

Um bei Textilien, die ganz oder teilweise aus synthetischen Fasern bestehen, eine dauerhafte Verbesserung der Benetzbarkeit und damit des Tragekomforts zu erreichen, empfiehlt es sich, die Behandlung mit den Acetylacetonaten bzw. Halogenacetylacetonaten vor oder während der Faserherstellung vorzunehmen. Dabei geht man zweckmässigerweise so vor, dass man die zur Faserherstellung verwendeten Polymere vor dem Einbringen in die Schmelzspinnapparatur mit den Acetylacetonaten oder Halogenacetylacetonaten behandelt, für eine innige Vermischung sorgt und die so erhaltene Mischung dem Schmelzspinnen unterwirft. Das so erhaltene Produkt zeigt eine erheblich verbesserte Benetzbarkeit, die dauerhaft ist und auch nach einer Vielzahl von Waschvorgängen sowie nach mechanischer Belastung der aus den Fasern hergestellten Gewebe erhalten beleibt. Derart behandelte Textilien sind demzufolge in herkömmlicher Weise imprägnierten Geweben hinsichtlich des Tragekomforts überlegen.

Bei der Stabilisierung von Suspensionen geht man zweckmässigerweise so vor, dass man die Acetylacetonate und/oder Halogenacetylacetonate in das zu suspendierende Material einarbeitet, dieses anschliessend auf die gewünschte Teilchengrösse zerkleinert und danach im flüssigen Suspensionsmedium verteilt. Besteht das zu suspendierende Material aus mehreren Komponenten, so genügt es, eine der Komponenten mit den Acetyacetonaten und/oder Halogenacetylacetonaten zu behandeln. So kann z.B. im Falle von Suspensionen von Trägerkatalysatoren der Trägerstoff zunächst mit diesen Verbindungen behandelt und anschliessend mit der Katalysatorsubstanz vermischt werden. In ähnlicher Weise kann bei der Konfektionierung von Schädlingsbekämpfungsmitteln vorgegangen werden.

**Patentansprüche**

1. Verfahren zum Benetzbarmachen von Substraten, insbesondere von in fester, gelartiger oder glasartiger Form vorliegenden Substraten, ausgenommen Substrate aus chlorhaltigen Polymeren, durch Behandeln mit einer Verbindung eines Elementes der IV. Haupt oder Nebengruppe des Periodensystems der Elemente, dadurch gekennzeichnet, dass man als Verbindung eines Elementes der IV. Haupt- oder Nebengruppe ein im Substrat nicht lösliches Acetylacetonat oder Halogenacetylacetonat verwendet, dieses in das zur Bildung des Substrats bestimmte Material vor der Formgebung einarbeitet, derart, dass das Acetylacetonat oder Halogenacetylacetonat unter Bildung punktförmiger Aggregate mit einer Teilchengrösse im Bereich von $10^{-4}$ bis $10^{-7}$ cm gleichmässig in dem das Substrat bildenden Material verteilt wird, und anschliessend das Substrat in die gewünschte Form bringt.

2. Verfahren nach Anspruch 1, dadurch gekennzeichnet, dass man das Acetylacetonat oder Halogenacetylacetonat in Form einer Lösung, insbesondere in einem organischen Lösungsmittel, einsetzt.

3. Verfahren nach Anspruch 1, dadurch gekennzeichnet, dass man das Acetylacetonat oder Halogenacetylacetonat in Form einer Suspension einsetzt.

4. Verfahren nach einem der vorangehenden Ansprüche, dadurch gekennzeichnet, dass man im Falle eines aus mindestens zwei Komponenten zu bildenden Substrats, eine der beiden Komponenten mit dem Acetylacetonat oder Halogenacetylacetonat behandelt und anschliessend die so behandelte Komponente mit den übrigen Komponenten vermischt.

5. Verfahren nach einem der vorangehenden Ansprüche, dadurch gekennzeichnet, dass man das Acetylacetonat oder Halogenacetylacetonat an einem inerten Träger adsorbiert und den mit dem Acetylacetonat oder Halogenacetylacetonat beladenen Träger mit den übrigen Komponenten des Substrats innig vermischt.

6. Verfahren nach einem der vorangehenden Ansprüche, dadurch gekennzeichnet, dass man im Falle eines Substrats aus Homo- oder Copolymeren das Acetylacetonat oder Halogenacetylacetonat den als Ausgangsmaterial dienenden Monomeren und/oder Präpolymeren vor der Polymerisation zusetzt.

7. Verfahren nach einem der vorangehenden Ansprüche, dadurch gekennzeichnet, dass man das Acetylacetonat oder Halogenacetylacetonat in einer Menge von 1 bis 50 Gew.-%, vorzugsweise annähernd 10 Gew.-%, bezogen auf das Gewicht des Substrats einsetzt.

8. Verfahren nach einem der vorangehenden Ansprüche, dadurch gekennzeichnet, dass man Zirkonacetylacetonat oder Zinndichloriddiacetylacetonat verwendet.

9. Verfahren nach einem der Ansprüche 1 bis 8 zur Verbesserung der Benetzbarkeit von plastischen Massen, z.B. von Kunststoffen oder Kautschuken.

10. Verfahren nach einem der Ansprüche 1 bis 8 zur Verbesserung der Benetzbarkeit von Textilien, die ganz oder teilweise aus synthetischen Fasern bestehen.

11. Verfahren nach einem der Ansprüche 1 bis 8 zur Verbesserung der Benetzbarkeit von Baumaterialien, insbesondere Betonprodukten.

12. Verfahren nach einem der Ansprüche 1 bis 8 zur Verbesserung der Benetzbarkeit von Strassenbelägen.

13. Verfahren nach einem der Ansprüche 1 bis 8 zur Stabilisierung von Suspensionen, dadurch gekennzeichnet, dass man ein Acetylacetonat oder Halogenacetylacetonat in das zu suspendierende Material einarbeitet, danach das so erhaltene Material zerkleinert und anschliessend die dabei erhaltenen Teilchen suspendiert.

14. Verfahren nach Anspruch 13 zur Stabilisierung von Farbstoffsuspensionen.

15. Verfahren nach Anspruch 13 zur Stabilisierung von Dispersionsfarben.

16. Verfahren nach Anspruch 13 zur Stabilisierung von Katalysatorsuspensionen.


## Claims

1. Process for increasing the wettability of substrates, particularly of substrates in the solid, gel-like or glass-like form, except substrates of polymers containing chlorine, by treating with a compound of an element of the IVth main or secondary groups of the periodic system of the elements, characterized in that an acetylacetonate or a halogenated acetylacetonate being not soluble in the substrate is used as the compound of an element of the IVth main of secondary groups of the Periodic system of the elements; the acetylacetonate or halogenated acetylacetonate is incorporated into the substrate forming material prior to forming of the substrate in a manner that the acetylacetonate or the halogenated acetylacetonate is uniformly distributed in the substrate forming material while forming finely divided punctiform aggregates the particle size of which lies in the range of $10^{-4} 10^{7}$ cm; and subsequently the substrate is given the desired shape.

2. Process according to claim 1, characterized in that the acetylacetonate or halogenated acetylacetonate is applied in the form of a solution, particularly of a solution in an organic solvent.

3. Process according to claim 1, characterized in that the acetylacetonate or halogenated acetylacetonate is applied in the form of a suspension.

4. Process according to one of the preceding claims, characterized in that, when the substrate is formed by at least two components, one of both components is treated with the acetylacetonate or halogenated acetylacetonate and the component thus treated is subsequently mixed with the other components.

5. Process according to one of the preceding claims, characterized in that, the acetylacetonate or halogenated acetylacetonate is adsorbed on an inert carrier and the carrier thus loaded with the acetylacetonate of halogenated acetylacetonate is intimately mixed with the other components of the substrate.

6. Process according to one of the preceding claims, characterized in that, when the substrate is formed of homo or copolymers, the acetylacetonate or halogenated acetylacetonate is added to the monomers and/or pre-polymers being used as starting materials prior to the polymerisation.

7. Process according to one of the preceding claims, characterized in that the acetylacetonate or halogenated acetylacetonate is used in an amount of 1 to 50 % by weight, preferably in an amount of approximately 10 % by weight, relative to the weight of the substrate.

8. Process according to one of the preceding claims, characterized in that zirconiumacetylacetonate or tin dichloride-diacetylacetonate is used.

9. Process according one of the claims 1 to 8 for increasing the wettability of plastic materials, for example synthetic resins or rubbers.

10. Process according one of the claims 1 to 8 for increasing the wettability of textiles formed entirely of partially of synthetic fibers.

11. Process according one of the claims 1 to 8 for increasing the wettability of building materials, particularly concrete products.

12. Process according one of the claims 1 to 8 for increasing the wettability of road surface coverings.

13. Process according one of the claims 1 to 8 for stabilizing suspensions, characterized in that an acetylacetonate or a halogenated acetylacetonate is incorporated into the material to be suspended whereafter the thus obtained material is disintegrated and subsequently the thus obtained particles are suspended.

14. Process according to claim 13 for stabilizing dye suspensions.

15. Process according to claim 13, for stabilizing dispersion dyes.

16. Process according to claim 13 for stabilizing catalyst suspensions.

## Revendications

1. Procédé pour améliorer la mouillabilité de substrats notamment de substrats solides, de substrats à l'état de gel ou de substrats à l'état vitreux, à l'exclusion de substrats formés de polymères chlorés, par traitement à l'aide d'un composé d'un élément du groupe ou du sousgroupe IV de la classification périodique des éléments, caractérisé en ce qu'on utilise comme composé d'un élément du groupe ou du sousgroupe IV, un acétylacétonate ou un acétylacétonate halogéné non soluble dans le substrat, on introduit ce composé avant mise en forme dans le matériau destiné à former le substrat de façon que l'acétylacétonate ou l'acétylacétonate halogéné soit réparti régulièrement dans le matériau formant le substrat de manière à constituer des agrégats ponctuels ayant une dimension de particules comprise entre $10^{-4}$ et $10^{-7}$ cm puis on met le substrat sous la forme souhaitée.

2. Procédé selon la revendication 1, caractérisé en ce qu'on utilise l'acétylacétonate ou l'acétylacétonate halogéné sous la forme d'une solution notamment d'une solution dans un solvant organique.

3. Procédé selon la revendication 1, caractérisé en ce qu'on utilise l'acétylacétonate ou l'acétylacétonate halogéné sous la forme d'une suspension.

4. Procédé selon l'une quelconque des revendications précédentes, caractérisé en ce qu dans le cas d'un substrat destiné à être réalisé à partir d'au moins deux composants, on traite l'un des deux composants avec l'acétylacétonate ou l'acétylacétonate halogéné, puis on mélange le composant ainsi traité avec les autres composants.

5. Procédé selon l'une des revendications précédentes, caractérisé en ce qu'on adsorbe l'acétylacétonate ou l'acétylacétonate halogéné sur un support inerte et on mélange intimement le support chargé en acétylacétonate ou en acétylacétonate halogéné avec les autres composants du substrat.

6. Procédé selon l'une des revendications précédentes, caractérisé en ce que, dans le cas d'un substrat formé d'homo- ou de copolymères, on ajoute l'acétylacétonate ou l'acétylacétonate halogéné aux monomères et/ou prépolymères constituant le matériau de départ avant la polymérisation.

7. Procédé selon l'une des revendications précédentes, caractérisé en ce qu'on utilise l'acétylacétonate ou l'acétylacétonate halogéné, en une proportion de 1 à 50 % en poids de préférence au voisinage de 10 % en poids par rapport au poids du substrat.

8. Procédé selon l'une des revendications précédentes, caractérisé en ce qu'on utilise de l'acétylacétonate de zirconium ou du dichloro-diacétylacétonate d'étain.

9. Procédé selon l'une des revendications 1 à 8, pour améliorer la mouillabilité de masses plastiques par exemple de matières synthétiques ou de caoutchoucs.

10. Procédé selon l'une des revendications 1 à 8, pour améliorer la mouillabilité de produits textiles constitués en totalité ou en partie de fibres synthétiques.

11. Procédé selon l'une des revendications 1 à 8, pour améliorer la mouillabilité de matériaux de construction notamment de produits en béton.

12. Procédé selon l'une des revendications 1 à 8, pour améliorer la mouillabilité de revêtements routiers.

13. Procédé selon l'une des revendications 1 à 8, pour stabiliser des suspensions, caractérisé en ce qu'on introduit un acétylacétonate ou un acétylacétonate halogéné dans le matériau à mettre en suspension, puis on broie le matériau ainsi obtenu et on met les particules ainsi formées en suspension.

14. Procédé selon la revendication 13, pour stabiliser de suspensions de colorants.

15. Procédé selon la revendication 13, pour stabiliser des colorants à l'état de dispersions.

16. Procédé selon la revendication 13, pour stabiliser des catalyseurs à l'état de suspensions.